# EUROPÄISCHE PATENTSCHRIFT

(11) **EP 3 095 686 B1**
(45) Veröffentlichungstag und Bekanntmachung des Hinweises auf die Patenterteilung: **27.02.2019**
(21) Anmeldenummer: 16177886.5
(22) Anmeldetag: 24.08.2012
(51) Int. Cl.: B63B 19/00, B60J 1/00, B32B 17/10

(54) **GLASSCHEIBENANORDNUNG IN EINEM WASSERFAHRZEUG**
GLASS DISC ASSEMBLY IN AN AQUATIC VEHICLE
AGENCEMENT DE VITRE DANS UN BATEAU

(30) Priorität: 25.08.2011 DE 202011051103 U
(43) Veröffentlichungstag der Anmeldung: 23.11.2016
(62) Teilanmeldung aus: 12181757.1
(73) Patentinhaber: TILSE Industrie- und Schiffstechnik GmbH, 22529 Hamburg (DE)
(72) Erfinder: Tilse, Hans-Joachim, 22529 Hamburg (DE)
(74) Vertreter: RGTH

(56) Entgegenhaltungen:
- EP-A2- 0 214 056
- DE-A1-102006 003 935
- DE-A1-102009 012 202
- FR-A1- 2 541 359
- FR-A1- 2 823 789
- US-A- 3 935 681
- US-A- 4 113 904

## Beschreibung

### Technisches Gebiet

Die Erfindung betrifft ein Wasserfahrzeug, wie ein Schiff, ein Kreuzer, eine Yacht, ein Boot oder dergleichen mit einer daran und/oder darin angeordneten Glasscheibenanordnung mit einer Brandschutzverglasung.

Brandschutzbestimmungen fordern spezielle Brandschutzverglasungen auf Yachten bzw. Schiffen. Für diese sind jedoch spezielle Rahmen vorgesehen. Zwar erfüllen solche Rahmenkonstruktionen die Bestimmungen, jedoch müssen dadurch erhebliche Einschränkungen bezüglich des Außendesigns der Yacht in Kauf genommen werden. Solche außen deutlich sichtbare Rahmen erlauben nämlich beispielsweise keine sogenannten Fensterbänder, die wie eine durchgehende bandförmige Glasfront wirken, die bei Kunden sehr gefragt sind und gerne von Designern gewählt werden.

### Stand der Technik

Aus der DE 4417496 C4 ist ein Scheibenaufbau für eine Brandschutzisolierverglasung bekannt. Zwischen den beiden äußeren Scheiben ist eine Scheibe aus transparenter Glaskeramik angeordnet.

Die DE 202008016781 U1 zeigt und beschreibt eine Brandschutzverglasung in Form eines Fensters mit zwei parallel beabstandeten Glasscheiben. Hierfür werden eine Halterung mit einem Halteelement, einen Abstandshalter, eine Gegenplatte und Fixiermittel eingesetzt.

Die FR 2 541 359 A1 beschreibt eine Glasscheibenanordnung für einen marinen Einsatz. Die Anordnung umfasst eine erste Verglasung, die eine Außenverglasung ist, und umfasst eine zweite Verglasung, die als Innenverglasung und als Brandschutzverglasung ausgeführt ist. Die Innenverglasung erfüllt Brandschutzanforderungen, so dass eine kombinierte Doppelverglasung vorhanden ist, wobei die Innenverglasung einen feuerfesten Brandschutzrahmen umfasst. Die erste Verglasung wird in einem Chassis montiert.

Die US 3,935,681 A1 offenbart eine Glasscheibenanordnung mit zwei Scheiben, die beide als Brandschutzverglasungen beschrieben sind. Eine erste Scheibe ist eine Brandschutzverglasung. Eine zweite Scheibe soll ebenfalls feuerresistent sein. Beide Scheiben werden von einem Rahmen gehalten. Eine Kammer mit Feuerschutzmaterial soll hier im Brandfall einen Feuerschutz bieten.

Die US 4,113,904 A1 offenbart eine Anordnung mit zwei Scheiben, die in einem gemeinsamen Rahmen gehalten sind.

### Darstellung der Erfindung: Aufgabe, Lösung, Vorteile

Der Erfindung liegt die Aufgabe zugrunde, eine Glasscheibenanordnung zu finden, mit der einerseits eine Brandschutznorm erfüllt und die anderseits den Designer- und Kundenwünschen gerecht wird.

Diese Aufgabe wird durch ein Wasserfahrzeug mit einer daran und/oder darin angeordneten Glasscheibenanordnung mit den im Anspruch 1 angegebenen Merkmalen gelöst.

Die erfindungsgemäße Glasscheibenanordnung des Wasserfahrzeugs ist eine kombinierte Außenverglasung mit einem Brandschutzglas. Sie wird insbesondere bei Schiffen und dergleichen eingesetzt.

Der Erfindung liegt der Gedanke zugrunde, eine erste Verglasung vorzusehen, die die Designerwünsche berücksichtigt. Diese ist eine Außenverglasung und prägt das Schiffsdesign sehr. Diese Verglasung ist aber ohne eine Erfüllung von Brandschutzanforderungen ausgeführt. Um die Wünsche der Sicherheits-Ingenieure zu erfüllen, wird eine zweite Verglasung dahinter angeordnet. Die Anordnung hat daher eine zweite Verglasung, die als Innenverglasung und als Brandschutzverglasung ausgeführt ist. Die zweite Verglasung erfüllt Brandschutzanforderungen bzw. Brandschutznormen im Schiffsbau. Der Vorteil der Erfindung ist, dass die Brandschutzkonstruktion von außen optisch kaum wahrgenommen wird.

Die Erfindung liegt in einer speziellen, kombinierten Doppelverglasung mit der verklebten Außenscheibe.

Die Lösung hat aber auch weitere überraschende Vorteile. Wird die innere Brandschutzverglasung zerstört, so dass nur die äußere Verglasung vorhanden ist, so schützt die intakte Außenscheibe wie eine Notverglasung, die einen Wind- und Wasserschutz bietet.

Auch wenn die äußere Verglasung zerstört wird, so dass nur die innere Verglasung intakt ist, wird ein Wind- und Wasserschutz erreicht.

Bis zu einer Reparatur kann das provisorische Fenster gute Dienste bieten.

Die erfindungsgemäße Verglasung kann eine kombinierte Außenverglasung aus FORMGLAS SPEZIAL® mit Brandschutzglas vorzugsweise A0 bzw. A60 sein. Brandschutzverglasungen vorzugsweise A0 bzw. A60 im Schiffbau können somit normgerecht mit gerahmten Fenstern verwirklicht werden.

Eine Verglasung wird als Brandschutzverglasung bezeichnet, wenn die gesetzlichen oder Normen entsprechend den Vorgaben durch Teste erfüllt werden. Bei einer Brandschutzverglasung A0 darf sich die Außenscheibe (dem Feuer abgewandte Scheibe) unbegrenzt erhitzen, ohne dabei zerstört zu werden. Man kann mit Hilfe von Sprinklern oder Wassernebel den Temperaturabstieg auf der Außenscheibe reduzieren. Damit wird dann eine A60 Verglasung erreicht. Eine A-60 Verglasung alleine muss so aufgebaut werden, dass ohne eine Sprinkler- oder Wassernebelanlage die Temperatur nur begrenzt ansteigt. Dadurch soll verhindert werden, dass Menschen, die sich vor einem A60 Glas versammeln nicht mit ihrer Kleidung in Brand geraten. Die grundsätzlichen Testbedingungen sind für A0 und A60 fast vergleichbar. Dies sind Normen bzw. gesetzliche Vorschriften. Der besondere Erfindungsgedanke ist die Verbindung der Außenverglasung mit der Brandschutzverglasung.

Für die Verglasung auf Schiffen und Yachten sowie Spezialschiffen und Sonderkonstruktionen im Schiffbau können Designerwünsche nach einer optisch einheitlichen Außenverglasung erfüllt werden. Dabei kann es sich um Brandschutzverglasungen mit "normalen" Außenscheiben (Mono-, Zweifach- oder Mehrfachverbund), durchsichtigem oder nur lichtdurchlässigem "Dekorglas" bzw. Wärme- sowie Blindverglasungen handeln.

Für die Brandschutzverglasungen müssen spezielle Rahmen verwendet werden. Durch die Erfindung können im Schiffbau und in der Industrie vorgeschriebene Brandschutzgläser vorzugsweise A0 oder A60 in feuerfesten Spezialrahmen eingesetzt werden. Durch die Erfindung wird das Problem gelöst, dass diese Rahmen sichtbar sind und das Glas- bzw. ein Fensterband unterbrechen. Eine optische, einheitliche Außenverglasung ist durch die erfindungsgemäße Doppelkonstruktion möglich. Die Anordnung kann eine kombinierte Mono-, Zwei- oder Mehrfach-Verbundverglasung sein. Sie kann plan oder gebogen ausgeführt sein und wird in Verbindung mit der industriellen Brandschutzverglasung mit Rahmen nach den gültigen Vorschriften und Spezifikationen eingesetzt. Unter kombiniert ist dabei die Verbindung eines Brandschutzglases mit der Außenverglasung gemeint, die die erforderliche Festigkeit gemäß Klassifizierungsvorschriften haben muss. Die Kombination der einzelnen Glasscheiben wird durch schwer entflammbare Interlayer erreicht.

Mit der Erfindung wird nicht nur die Ästhetik der Außenkontur geändert, sondern neben dem auch ein verbesserter Wärme- und Schallschutz sowie ein erhöhter Schutz gegen statischen und dynamischen Druck erreicht.

Der Glasaufbau der Außenverglasung bei der erfindungsgemäßen kombinierten Brandschutzverglasung ist von den Einsatzbedingungen und den Vorschriften abhängig, so dass auch Mono-, Zweifach- und Mehrfachverbundglas zum Einsatz kommt.

Die Außenscheibe(n) können als gehärteter Einzel-, Zweifach- oder Mehrfachverbund mit einem Spezialkleber mit der inneren erfindungsgemäßen Konstruktion verklebt werden. Die notwendigen Dehnungsfugen zwischen Rahmenkonstruktion und Glas (Glasverbund) können berücksichtigt werden, genauso wie ein Isolierverbund mit Brandschutzglas vorzugsweise A0 bzw. A60.

Die Rahmen der erfindungsgemäßen inneren Brandschutzverglasung, die vorzugsweise mit Brandschutzglas A0 oder A60 ausgeführt ist, können problemlos am Schiffskörper verschweißt, verklebt oder verschraubt werden. Ein Einbau der Außenscheibe als Einfachscheibe oder als Zweifach- bzw. Mehrfachverbund kann entweder im Werk oder an Bord als Isolierfenster temperaturbeständig und dauerhaft verklebt werden.

Um bestimmte Anforderungen zu erreichen, kann eine gasdichte Verbindung sowie eine temperaturbeständige Verklebung zwischen Außen- und Brandschutzverglasung vorzugsweise in A0 oder A60 berücksichtigt werden, die zudem den ästhetischen Anforderungen der Designer entspricht.

Insbesondere ist die Erfindung eine Kombination einer Yacht-BrandschutzVerglasung mit Sicherheits-Verglasung. Nach außen soll man nur die optisch ansprechende eingefasste Sicherheits-Verglasung sehen. Also ist die Außenverglasung eine Sicherheitsverglasung. Von innen ist eine Brandschutzverglasung dahinter gefügt, um den Brandschutzvorschriften zu genügen.

Weitere vorteilhafte Ausgestaltungen der Erfindung sind in den Unteransprüchen gekennzeichnet.

In einer vorteilhaften Weiterbildung der erfindungsgemäßen Anordnung ist vorgesehen, dass die Innenverglasung einen feuerfesten Brandschutzrahmen umfasst. Im Brandfall besteht eine stabile mechanische Verbindung der Feuerschutzscheibe durch den Rahmen. Die Rahmenlösung hat sich im Brandfall sehr bewährt.

Bei einer weiteren vorteilhaften Ausführung der Erfindung umfasst die Innenverglasung Brandschutzgläser vorzugsweise nach A0 oder A60. Normen können somit in vollem Umfang erfüllt werden.

Eine besonders bevorzugte Weiterbildung der Erfindung zeichnet sich dadurch aus, dass die Innenverglasung in einer Rahmenkonstruktion an einem Schiffskörper feuerfest verbunden ist, z. B. verschweißt, verschraubt, genietet oder anders feuerfest gefügt ist.

Um die Außenscheibe im modernen "Look" erscheinen zu lassen, umfasst die Außenverglasung eine an einem Träger verklebte Scheibe.

Eine weitere sehr wichtige bevorzugte Maßnahme, um die Befestigungskonstruktion zu vereinfachen, beinhaltet, dass zumindest eine Scheibe der Außenverglasung an dem Brandschutzrahmen verklebt ist, so dass der Rahmen zumindest teilweise als Träger der Außenverglasung dient. Ein zusätzliches Trägerteil für das Außenglas kann somit entfallen.

Eine weitere sehr entscheidende Verbesserung in Bezug auf eine Energieeinsparung wird erreicht, indem die Außenverglasung als Mono-, Zweifach- oder Mehrfachverbundglas ausgeführt ist und/oder ein thermisches Isolierfenster umfasst.

Designgünstig ist es auch, dass die Außenverglasung als Fensterband ausgeführt ist. Das Fensterband wirkt optisch wie ein einziges langes Glasteil.

Auch "fensterlose" Bereiche des Schiffes können sehr interessant gestaltet werden, wenn eine flächige Außenverglasung vorhanden ist, so dass nur ein Teilbereich der Fläche mit der Brandschutzverglasung versehen ist, während der übrige Teil der Fläche mit einer nicht transparenten Schiffswand versehen ist. Tragende Wände und dergleichen können so im Fensterbanddesign ausgeführt sein.

Besonders vorteilhaft ist auch, dass die Außenverglasung zwei mittelbar oder unmittelbar benachbarte Brandschutzrahmen überbrückt. Dies schafft eine stabile Feuerschutzkonstruktion einerseits und ein einstückiges Fensterbanddesign andererseits.

### Kurze Beschreibung der Zeichnungen

Ausführungsbeispiele werden anhand der Zeichnungen näher erläutert, wobei weitere vorteilhafte Weiterbildungen der Erfindung und Vorteile derselben beschrieben sind.

Es zeigen:
Fig. 1 eine Darstellung einer Glasscheibenanordnung für eine Yacht,
Fig. 2 eine Darstellung einer zweiten Ausführungsform Glasscheibenanordnung,
Fig. 3 eine dritte Ausführungsform der Glasscheibenanordnung, und
Fig. 4 eine weitere Ausführungsform der Erfindung.

In den Figuren sind gleiche Teile mit denselben Bezugszeichen versehen.

### Bester Weg zur Ausführung der Erfindung

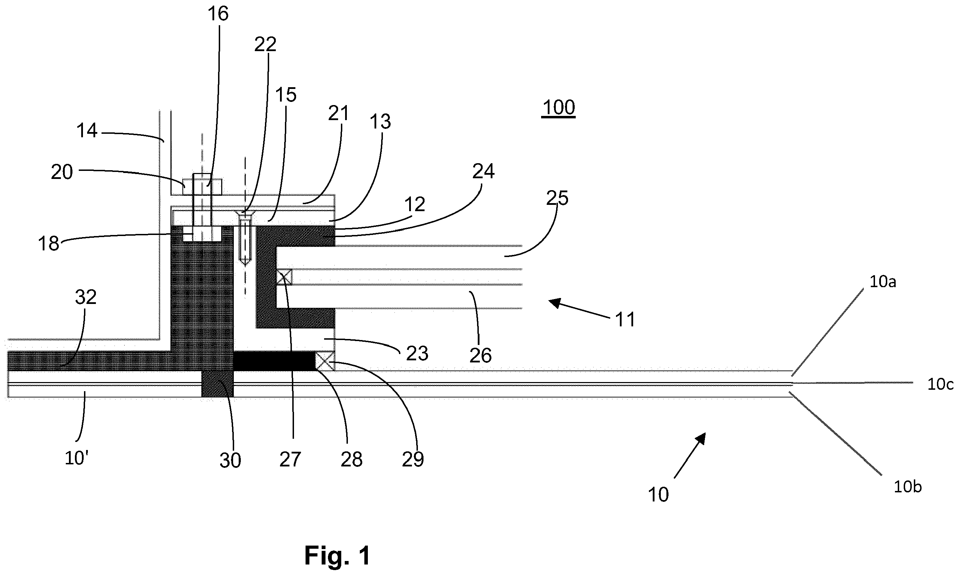

Fig. 1 zeigt eine Glasscheibenanordnung 100 für eine Yacht. Diese umfasst eine erste Verglasung 10, die als Außenverglasung angeordnet bzw. ausgeführt ist. Die erste Verglasung ist eine Sicherheits-Verglasung ohne besonderen Brandschutz bzw. ohne feuerfeste Ausführung. Die Außenverglasung erfüllt keine Brandschutzanforderungen gemäß einer Norm.

Die Glasscheibenanordnung 100 ist mit einer zweiten Verglasung 11 versehen, die als Innenverglasung und als Brandschutzverglasung ausgeführt ist. Diese erfüllt Brandschutzanforderungen und hat daher Brandschutzgläser vorzugsweise nach A0 oder A60 und einen feuerfesten Brandschutzrahmen 12.

Die Innen- und Außenverglasung 10, 11 ergeben eine kombinierte Doppelverglasung mit verschiedenen Brandschutzcharakteristiken.

Weil die Innenverglasung in einer Rahmenkonstruktion 13 an einem Schiffskörper 14 verschraubt werden soll, wird ein flaches, erstes Rahmenteil 15 bzw. eine Trägerplatte mit dem Schiffskörper 14 durch eine Schraubenverbindung 16 festgelegt. Die Schraubenverbindung 16 hat einen Schraubbolzen 18 und eine Verbindungsmutter 20, die das erste Rahmenteil 15 mit einem Wandabschnitt 21 verbinden.

An dem ersten Rahmenteil 15 wird ein mit Schrauben 22 vormontiertes L-Profil als zweites Rahmenteil 23 eingesetzt, das zusammen mit dem ersten Rahmenteil 15 eine U-förmige Rahmenhalterung ergibt, wie Fig. 1 veranschaulicht.

Die Rahmenteile 15 und 23 bestehen aus hitzebeständigem Metall. In der U-förmigen Rahmenhalterung liegt ein U-förmiges Abdichtelement 24 oder eine Dichtmasse, die brandschutzgeeignet ist. Im Rahmen befinden sich zwei Scheiben 25 und 26 mit einem zwischenliegenden Abstandselement 27. Die innere Scheibe 25 ist eine A0-Komponente, während die davor liegende Scheibe 26 eine Trägerscheibe ist.

Auf dem Rahmen bzw. dem zweiten Rahmenteil 23 wird eine Verbundscheibe bzw. die Außenverglasung 10 verklebt, wobei eine Klebermasse 28 und ein Abstandselement 29 zu sehen sind. Über eine Fuge 30 bzw. einer weiteren Außenverglasung 10' wird die Außenverglasung in der Art eines Fensterbandes fortgesetzt, wie Fig. 1 zeigt.

Das Beispiel gemäß Fig. 1 veranschaulicht also, dass die Außenverglasung 10 eine an einem Träger 23 verklebte Scheibe umfasst, und dass zumindest eine Scheibe der Außenverglasung 10 an dem Brandschutzrahmen 12 verklebt ist, so dass der Rahmen 23 zumindest teilweise als Träger der Außenverglasung 10 dient. Die Außenverglasung 10 kann als Mono-, Zweifach- oder Mehrfachverbundglas ausgeführt sein und/oder ein thermisches Isolierfenster umfassen, wobei die Außenverglasung 10, 10' als Fensterband ausgeführt ist. Bei kombinierten einzelnen Glasscheiben zur Bildung der Außenverglasung 10 werden die Glasscheiben 10a, 10b durch schwer entflammbare Interlayer 10c, insbesondere aus Giesharz, verbunden.

Bei der ersten Ausführungsform gemäß Fig. 1 ist nur ein Teilbereich der Fläche (Bereich der Verglasung 10) mit der Brandschutzverglasung versehen, während der übrige Teil der Fläche (Bereich der Verglasung 10') mit einer nicht transparenten Schiffswand 32 versehen ist.

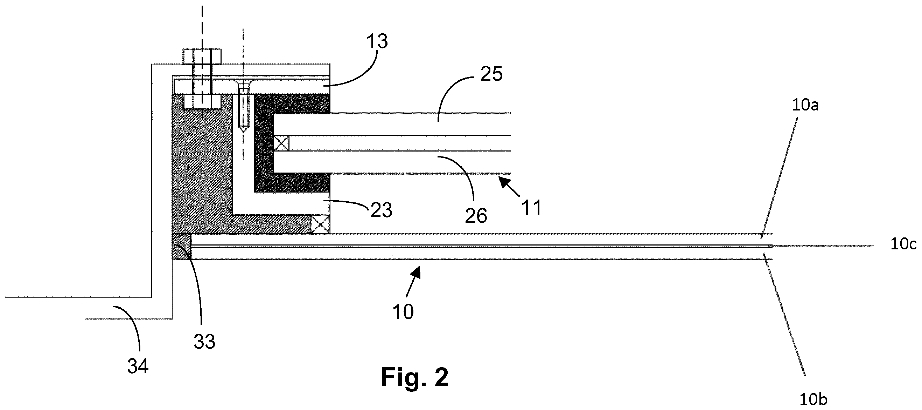

Die Anordnung von Fig. 2 unterscheidet sich von der Ausführungsform gemäß Fig. 1 dadurch, dass die Außen-Fensterfront in einem Endbereich 33 an einem Schiffskörperteil 34 endet. Ansonsten ist die Ausführung mit dem vorgenannten Beispiel vergleichbar.

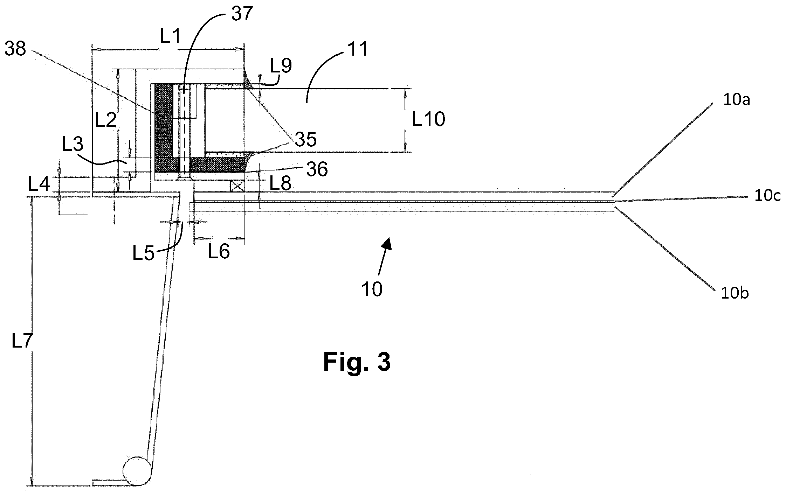

In Fig. 3 ist eine mit Fig. 2 vergleichbare Anordnung bzw. ein Dimensionierungsbeispiel, jedoch mit A60 Verglasung 11, gezeigt. Die Verglasung 11 ist mit einer Abdichtung 35, Butyl-Material, einer alternativen Verschraubung 37 und Rahmenkonstruktion versehen. Die Abmessungen können sein (Angaben in mm) L1 = 100 - 110, L2 = 80 - 90, L3 = 8 - 12, L4 = 8 - 12, L5 = 6 - 8, L6 = 30 - 40, L7 = 180 - 220, L8 = 6 - 10, L9 = 3 - 5; L10 = 40 - 48 (bevorzugt werden die mittigen Werte z.B. L1 = 105).

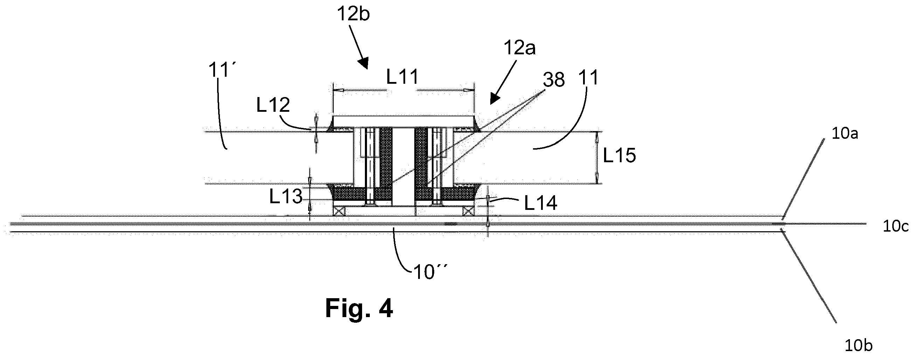

Fig. 4 veranschaulicht eine Konstruktion mit zwei nebeneinander liegenden Rahmen bzw. ein Feuerschutz 38 mit A60 Glas für die Innenverglasung 11, 11'.

Die Außenverglasung 10" überbrückt zwei mittelbar oder unmittelbar benachbarte Brandschutzrahmen 12a, 12b, wie Fig. 4 zeigt. Die Außenscheibe ist hier als fugenloses Fensterband ausgeführt.

Die Erfindung ist nicht auf dieses Beispiel beschränkt, so können auch Spezialschiffen oder andere Wasserfahrzeuge mit der erfindungsgemäßen Verglasung ausgestattet werden. Auch könne Merkmale der Beispiele, der Beschreibung, der Zeichnungen miteinander beliebig kombiniert werden, beispielsweise eine A0 Verglasung gemäß Fig. 1 mit einer Außenscheibenkonstruktion gemäß Fig. 4.

### Bezugszeichenliste

- 100: Glasscheibenanordnung
- 10, 10', 10": erste Verglasung
- 10a: Scheibe
- 10b: Scheibe
- 10c: Interlayer
- 11: zweite Verglasung
- 12: Brandschutzrahmen
- 13: Rahmenkonstruktion
- 14: Schiffskörper
- 15: erstes Rahmenteil
- 16: Schraubenverbindung
- 17: -
- 18: Schraubbolzen
- 19: -
- 20: Verbindungsmutter
- 21: Wandabschnitt
- 22: Schrauben
- 23: zweites Rahmenteil (L-Profil)
- 24: Spezialdichtung
- 25, 26: Scheiben
- 27: Abstandselement
- 28: Klebermasse
- 29: Abstandselement
- 30: Fuge
- 32: Schiffswand
- 33: Endbereich
- 34: Schiffskörperteil
- 35: Abdichtung
- 36: Butyldichtung
- 37: Verschraubung
- 38: Feuerschutz

## Patentansprüche

1. Wasserfahrzeug (14), wie ein Schiff, ein Kreuzer, eine Yacht, ein Boot oder dergleichen, mit einer daran und/oder darin angeordneten Glasscheibenanordnung (100) mit einer ersten Verglasung (10), die als Außenverglasung angeordnet ist, und mit einer zweiten Verglasung (11), die als Innenverglasung und als Brandschutzverglasung ausgeführt ist, so dass eine kombinierte Doppelverglasung vorhanden ist, **dadurch gekennzeichnet, dass** die Außenverglasung (10) als Fensterband ausgeführt ist, und dass eine flächige Außenverglasung (10) vorhanden ist, so dass nur ein Teilbereich der Fläche mit der Brandschutzverglasung versehen ist, während der übrige Teil der Fläche mit einer nicht transparenten Schiffswand versehen ist.

2. Wasserfahrzeug nach Anspruch 1, **dadurch gekennzeichnet, dass** die Innenverglasung (11) einen feuerfesten Brandschutzrahmen (12) umfasst.

3. Wasserfahrzeug nach Anspruch 1 oder 2, **dadurch gekennzeichnet, dass** die Innenverglasung (11) Brandschutzgläser nach A0 oder A60 umfasst.

4. Wasserfahrzeug nach einem der vorhergehenden Ansprüche, **dadurch gekennzeichnet, dass** die Innenverglasung (11) in einer Rahmenkonstruktion (13) an einem Schiffskörper (14) verschweißt oder verschraubt ist.

5. Wasserfahrzeug nach einem der vorhergehenden Ansprüche, **dadurch gekennzeichnet, dass** die Außenverglasung (10) eine an einem Träger (23) verklebte Scheibe umfasst.

6. Wasserfahrzeug nach den Ansprüchen 2 und 5, **dadurch gekennzeichnet, dass** zumindest eine Scheibe der Außenverglasung (10) an dem Brandschutzrahmen (12) verklebt ist, so dass der Rahmen (11) zumindest teilweise als Träger der Außenverglasung (10) dient.

7. Wasserfahrzeug nach einem der vorhergehenden Ansprüche, **dadurch gekennzeichnet, dass** die Außenverglasung (10) als Mono-, Zweifach- oder Mehrfachverbundglas ausgeführt ist und/oder ein thermisches Isolierfenster umfasst, wobei bevorzugterweise bei kombinierten Verglasungen aus zwei Scheiben (10a, 10b) ein Interlayer (10c), insbesondere aus schwer entflammbarem Gießharz, zwischen den Scheiben (10a, 10b) angeordnet ist.

8. Wasserfahrzeug nach einem der Ansprüche 2 bis 7, **dadurch gekennzeichnet, dass** die Außenverglasung (10) zwei mittelbar oder unmittelbar benachbarte Brandschutzrahmen (12) überbrückt.

## Claims

1. Watercraft (14), such as a ship, a cruiser, a yacht, a boat or the like, with a glass pane arrangement (100) arranged thereon and/or therein with a first glazing (10), which is arranged as an outer glazing, and with a second glazing (11), which is configured as an inner glazing and as a fire protection glazing, so that a combined double glazing is present, **characterized in that** the outer glazing (10) is configured as a band of windows and that a plane outer glazing (10) is present, so that only a partial area of the area is provided with the fire protection glazing, whereas the remaining part of the area is provided with a non-transparent ship wall.

2. Watercraft according to claim 1, **characterized in that** the inner glazing (11) comprises a refractory fire protection frame (12).

3. Watercraft according to claim 1 or 2, **characterized in that** the inner glazing (11) comprises fire protection glasses according to A0 or A60.

4. Watercraft according to one of the preceding claims, **characterized in that** the inner glazing (11) is welded or bolted in a frame construction (13) on a hull (14).

5. Watercraft according to one of the preceding claims, **characterized in that** the outer glazing (10) comprises a pane glued on a support (23).

6. Watercraft according to claims 2 and 5, **characterized in that** at least one pane of the outer glazing (10) is glued on the fire protection frame (12), so that the frame (12) at least partially serves as a support of the outer glazing (10).

7. Watercraft according to one of the preceding claims, **characterized in that** the outer glazing (10) is configured as a single-, double or multiple composite glass and/or comprises a thermal insulating window, wherein preferably, in case of glaszings combined from two panes (10a, 10b), an inter-layer (10c), in particular made of hardly inflammable cast resin, is arranged between the panes (10a, 10b).

8. Watercraft according to any one of claims 2 to 7, **characterized in that** the outer glazing (10) bridges two directly or indirectly adjacent fire protection frames (12).

## Revendications

1. Engin aquatique (14), tel qu'un navire, un paquebot, un yacht, un bateau ou similaire, avec un ensemble de vitres (100) disposé sur celui-ci et/ou dans celui-ci, avec un premier vitrage (10) disposé comme un vitrage extérieur, et avec un deuxième vitrage (11) conçu comme un vitrage intérieur et comme un vitrage pare-feu, de manière à obtenir un double-vitrage combiné, **caractérisé en ce que** le vitrage extérieur (10) est conçu comme une penture de fenêtre, et **en ce qu'**il est prévu un vitrage extérieur plat (10), de telle façon que seule une région partielle de la surface est pourvue d'un vitrage pare-feu, tandis que la partie restante de la surface est pourvue d'une paroi de navire non transparente.

2. Engin aquatique selon la revendication 1, **caractérisé en ce que** le vitrage intérieur (11) comporte un cadre pare-feu (12) réfractaire.

3. Engin aquatique selon la revendication 1 ou 2, **caractérisé en ce que** le vitrage intérieur (11) comporte des vitres pare-feu conformes à la norme A0 ou A60.

4. Engin aquatique selon l'une des revendications précédentes, **caractérisé en ce que** le vitrage intérieur (11) est soudé ou vissé dans une construction de cadre (13) sur un corps de navire (14).

5. Engin aquatique selon l'une des revendications précédentes, **caractérisé en ce que** le vitrage extérieur (10) comporte une vitre collée sur un support (23).

6. Engin aquatique selon les revendications 2 et 5, **caractérisé en ce qu'**au moins une vitre du vitrage extérieur (10) est collée sur le cadre pare-feu (12), de telle façon que le cadre (11) sert au moins partiellement de support pour le vitrage extérieur (10).

7. Engin aquatique selon l'une des revendications précédentes, **caractérisé en ce que** le vitrage extérieur (10) est conçu comme un verre composite simple, double ou multiple et/ou comporte une fenêtre d'isolation thermique, dans lequel, dans des vitrages combinés constitués de deux vitres (10a, 10b), une couche intermédiaire (10c), en particulier constituée de résine coulée difficilement inflammable, est de préférence disposée entre les vitres (10a, 10b).

8. Engin aquatique selon l'une des revendications 2 à 7, **caractérisé en ce que** le vitrage extérieur (10) enjambe deux cadres pare-feu (12) directement ou indirectement adjacents.
